# EUROPEAN PATENT APPLICATION

(11) **EP 4 836 142 A1**
(43) Date of publication of application: **04.11.2026**
(21) Application number: 24918025.8
(22) Date of filing: 15.08.2024
(51) Int. Cl.: H01M 50/264

(54) **BATTERY AND VEHICLE**

(30) Priority: 15.01.2024 CN 202420095909 U
(71) Applicant: Contemporary Amperex Technology Co., Limited, Ningde, Fujian 352100 (CN)
(72) Inventor: YAO, Pengcheng, Ningde, Fujian 352100 (CN); CHEN, Xingdi, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/112472
(87) International publication number: WO 2025/152414

(57) **Abstract**

Provided in the present application are a battery and a vehicle. The battery comprises battery cells, a box body and a protection plate, the battery cells being provided with explosion-proof valves. The battery cells are accommodated in the box body, the box body being provided with a box wall, and the explosion-proof valves facing the box wall. The protection plate is located between the battery cells and the box wall and is arranged to cover the battery cells, exhaust holes being formed in the positions of the protection plate corresponding to the explosion-proof valves, and the exhaust holes penetrating through the protection plate. When the battery is installed on a vehicle, the protection plate is located between the battery cells and the ground. Providing between the battery cells and the box wall of the battery the protection plate for fixing the battery cells reduces the movement of the bottoms of the battery cells relative to the box wall, thus reducing the probability of scraping the bottoms of the battery cells, improving the safety and reliability of the battery, and enhancing the self-protection performance of the battery. Moreover, the exhaust holes are formed in the positions of the protection plate corresponding to the explosion-proof valves of the battery cells, such that gas in the explosion-proof valves can be quickly discharged, thereby reducing the risk of thermal runaway.

## Description

The present application claims priority to Chinese Patent Application No. 202420095909.9, filed with the China National Intellectual Property Administration on January 15, 2024 and entitled "BATTERY AND VEHICLE", which is incorporated herein by reference in its entirety.

### TECHNICAL FIELD

The present application relates to the field of lithium battery technologies, and in particular, to a battery and a vehicle.

### BACKGROUND

Power batteries operate under complex conditions, and cells are highly susceptible to damage from sudden environmental changes during use of the batteries. Therefore, how to improve self-protection performance of a battery is an urgent problem to be resolved.

In view of this, a novel battery and vehicle are provided, to improve self-protection performance of the battery.

### SUMMARY

In view of the foregoing problem, the present application provides a battery and a vehicle, to resolve a technical problem of how to improve self-protection performance of a battery in the related art.

According to some embodiments of the present application, the present application provides a battery, including a cell, a box, and a guard. The cell has an explosion-proof valve. The cell is accommodated in the box. The box has a box wall. The explosion-proof valve faces the box wall. The guard is located between the cell and the box wall and is arranged to cover the cell. A vent hole is provided at a position on the guard corresponding to the explosion-proof valve. The vent hole runs through the guard. The guard is located between the cell and a ground when the battery is installed in a vehicle.

The guard is arranged between the cell and the box wall, and the guard fixes the cell, thereby reducing movement of a bottom of the cell relative to the box wall, reducing a probability of scraping of the bottom of the cell, improving safety and reliability of the battery, and improving the self-protection performance of the battery. In addition, the vent hole is provided at the position on the guard corresponding to the explosion-proof valve of the cell, to quickly discharge gas from the explosion-proof valve, reducing a risk of thermal runaway.

In some embodiments, a vent groove in communication with the vent hole is formed on a side of the guard facing away from the cell. The vent groove extends in a first direction and runs through the guard.

After the gas in the explosion-proof valve enters a corresponding vent hole, since the vent hole is in communication with the vent groove, the gas in the vent hole enters the vent groove. Since the vent groove runs through the guard, the gas in the vent groove enters the box. Through arrangement of the vent groove, an internal discharging capability of the battery is improved, discharging efficiency is improved, and the risk of thermal runaway is further reduced. In addition, the vent groove is located on a lower side of the guard, and a position of the vent groove corresponds to a direction in which the gas is jetted, so that the gas can quickly enter the vent groove, thereby further improving the discharging efficiency.

In some embodiments, a height of the guard is greater than 0.1 mm and less than 50 mm in an axial direction of the vent hole.

The height of the guard in the axial direction of the vent hole is limited to 0.1 mm to 50 mm, so that the guard has proper structural strength, and can support the cell, reduce scraping of the bottom of the cell, and effectively protect the cell in a bottom-scraping operation condition. In addition, space occupied by the guard in the box and a weight of the guard are properly limited, so that the battery can be more lightweight.

In some embodiments, the height of the guard is greater than or equal to 0.5 mm and less than or equal to 10 mm in the axial direction of the vent hole.

The height of the guard is further limited, so that the guard has proper structural strength, and can effectively protect the bottom of the cell in a bottom-scraping operation condition, to protect the cell. In addition, the space occupied by the guard in an accommodating cavity is limited, and a weight of the guard can also be limited.

In some embodiments, the guard has a hollow cavity. The hollow cavity runs through the guard in the first direction. The vent hole is in communication with the hollow cavity.

Through arrangement of the hollow cavity, the gas in the vent hole can enter the hollow cavity. The hollow cavity provides larger gas venting space for the explosion-proof valve, thereby improving the discharging efficiency of the battery. In addition, the arrangement of the hollow cavity makes the guard more lightweight, which can reduce mass of the battery, and facilitate installation and removal of the battery.

In some embodiments, the box includes an upper shell and a bottom guard. The upper shell and the bottom guard cooperate to form an accommodating cavity. The cell is accommodated in the accommodating cavity. A side wall of the bottom guard facing the upper shell is the box wall. The guard is arranged on the bottom guard. The cell is arranged between the guard and the upper shell.

The upper shell and the bottom guard are arranged to cooperate, so that the upper shell and the bottom guard jointly define the accommodating cavity, which helps accommodate the cell and the guard into the accommodating cavity, thereby protecting and accommodating the cell. The cell is arranged between the guard and the upper shell, to limit the cell in a vertical direction, reduce movement of the cell relative to the bottom guard in a horizontal direction, and reduce the probability of scraping of the bottom of the cell.

In some embodiments, an installation groove is formed on the bottom guard. The guard is arranged in the installation groove. A groove bottom wall of the installation groove is the box wall.

Arrangement of the installation groove limits the guard. The guard may be connected to a groove wall of the installation groove by bonding, so that the guard can be stably and reliably installed in the installation groove. In addition, arrangement of the installation groove also helps position the installation of the guard, so that the installation of the guard is quicker, and installation efficiency of the guard is improved.

In some embodiments, the guard is detachably connected to the upper shell.

The guard is detachably connected to the upper shell, so that the guard can be removed from the upper shell, which helps replace the guard when the guard is worn and also helps replace the guard with a different guard based on a quantity and arrangement of batteries. Therefore, use of the guard is more convenient, and use flexibility of the guard is improved.

In some embodiments, the guard is threadedly connected to the upper shell.

The threaded connection can achieve self-clinching, so that the guard is connected to the upper shell tightly and reliably, thereby enhancing connection strength between the guard and the upper shell, improving connection reliability between the guard and the upper shell, and improving structural stability of the battery.

In some embodiments, the guard is riveted to the upper shell.

The guard is riveted to the upper shell by a rivet. The riveting may be implemented by using a rivet in any manner of blind riveting, press riveting, or expansion riveting. Riveting has advantages such as high connection strength, good tightness, resistance to loosening, reliable resistance to impact loads, high efficiency, low noise, and simple operation.

In some embodiments, the guard is bonded to the cell.

The cell can be stably and reliably fixed to the guard by bonding, thereby improving connection stability between the cell and the guard, reducing a probability that the cell moves in the horizontal direction, reducing the scraping of the bottom of the cell, improving the safety and the reliability of the battery, and prolonging a service life of the battery.

In some embodiments, a plurality of cells are provided. The plurality of cells are stacked in the first direction. A quantity of the vent holes is the same as a quantity of the cells, and the vent holes and the cells are arranged in a one-to-one correspondence. The plurality of vent holes are arranged in an array in the first direction to form a vent hole group.

A plurality of cells are provided. The plurality of cells are stacked in the first direction. Through arrangement of the plurality of cells, the quantity of cells may be adjusted according to an actual situation, to adapt to different application scenarios. The quantity of the vent holes is the same as the quantity of the cells, and the vent holes and the cells are arranged in a one-to-one correspondence. A vent hole is correspondingly arranged at a position of an explosion-proof valve of each cell, so that the explosion-proof valve of each cell can quickly discharge gas.

In some embodiments, the guard includes a plurality of vent hole groups. The plurality of vent hole groups are arranged at intervals in a second direction. The second direction is perpendicular to the first direction.

The plurality of vent hole groups are arranged at intervals in a front-back direction. Each vent hole group includes a plurality of vent holes arranged at intervals in a left-right direction, that is, a plurality of vent holes are arranged in an array. The vent holes and the cells are arranged in a one-to-one correspondence, so that the plurality of cells can be evenly distributed, and a specific distance is maintained between two adjacent cells, so that the box can be stressed more evenly.

According to some embodiments of the present application, the present application provides a vehicle. The vehicle includes the foregoing battery. The guard is located between the cell and the ground. The vehicle includes all embodiments of all technical solutions of the foregoing battery. Therefore, the vehicle has at least all beneficial effects brought by all the foregoing embodiments, and details are not described herein.

The above description only refers to an overview of the technical solutions of the present application. To understand the technical means of the present application more clearly such that it can be implemented according to the content of the specification, and to make the foregoing and other purposes, features, and advantages of the present application more apparent, specific embodiments of the present application are listed below.

### BRIEF DESCRIPTION OF THE DRAWINGS

Various other advantages and benefits become apparent to a person of ordinary skill in the art by reading the following detailed description of preferred implementations. The accompanying drawings are only for the purpose of illustrating the preferred implementations and are not construed as a limitation to the present application. In addition, in all the accompanying drawings, the same components are indicated by the same reference numerals. In the accompanying drawings,
FIG. 1 is a schematic structural diagram of a vehicle according to some embodiments of the present application;

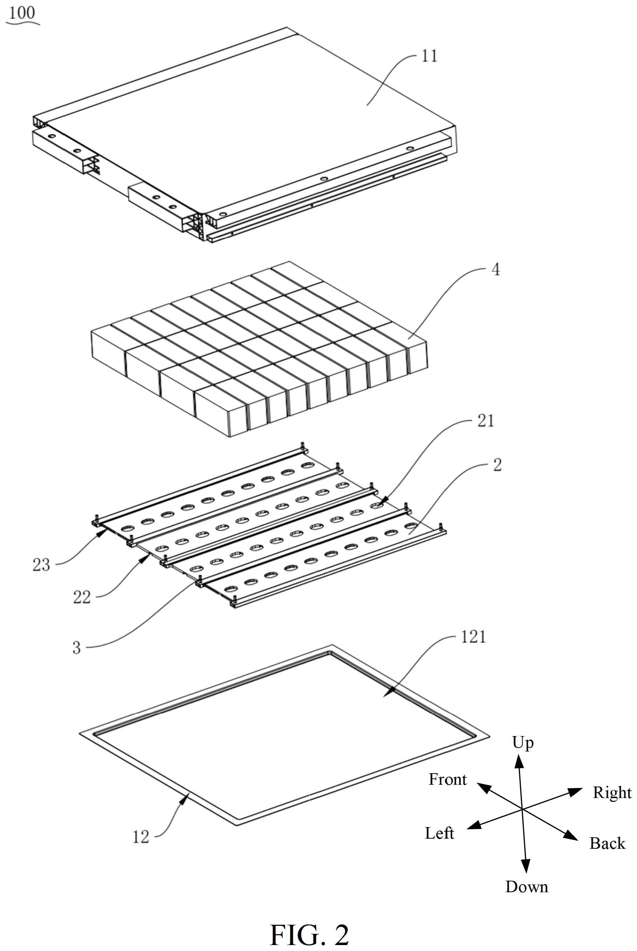

FIG. 2 is a schematic exploded structural view of a battery according to some embodiments of the present application;

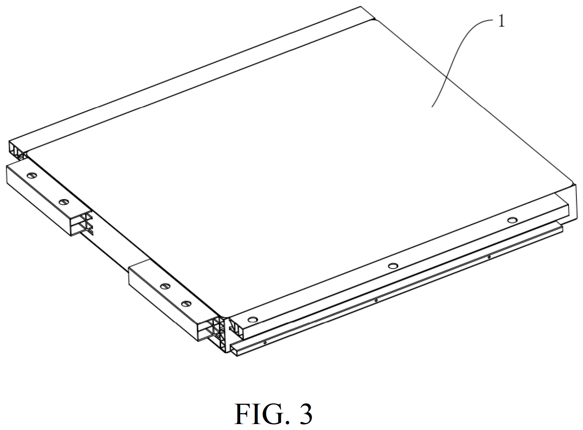

FIG. 3 is a schematic structural diagram of a battery according to some embodiments of the present application;
FIG. 4 is a schematic structural diagram of a guard in a battery according to some embodiments of the present application;
FIG. 5 is a schematic structural diagram of FIG. 4 from a perspective;
FIG. 6 is a schematic structural diagram of a guard in a battery according to some other embodiments of the present application;
FIG. 7 is a schematic structural diagram of FIG. 5 from a perspective;
FIG. 8 is a schematic structural diagram of connection of a guard in a battery according to some embodiments of the present application;
FIG. 9 is another schematic structural diagram of connection of a guard in a battery according to some embodiments of the present application; and

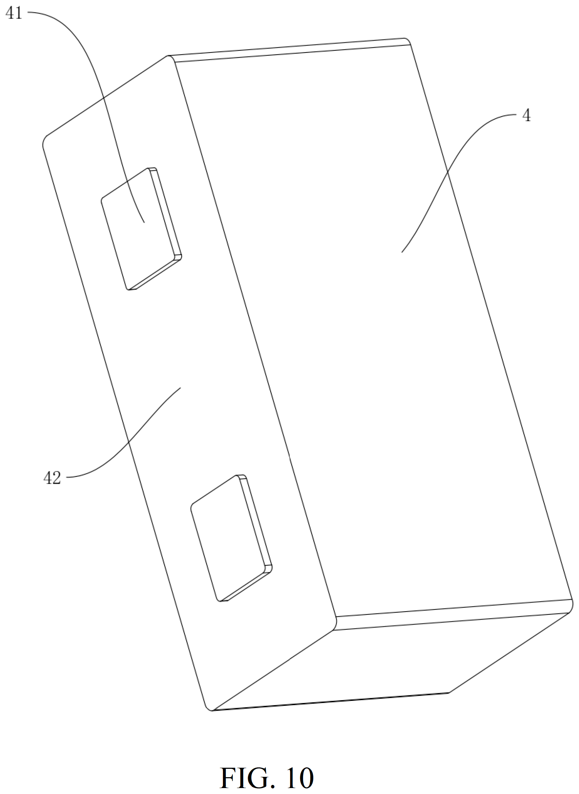

FIG. 10 is a schematic structural diagram of a cell in a battery according to some embodiments of the present application.

Reference numerals in the specific embodiments are as follows:
1000. vehicle;
100. battery; 200. controller; 300. motor;
1. box; 11. upper shell; 110. second connection hole; 12. bottom guard; 121. installation groove; 1211. box wall; 13. accommodating cavity;
2. guard; 21. vent hole; 22. vent groove; 23. hollow cavity; 24. first connection hole;
3. bolt; 31. screw rod; 32. end cap;
4. cell; 41. electrode terminal; 42. explosion-proof valve.

### DETAILED DESCRIPTION

The embodiments of the technical solutions of the present application are described in detail below with reference to the accompanying drawings. The following embodiments are only used to describe the technical solutions of the present application more clearly, and are thus only interpreted as examples, rather than used to limit the protection scope of the present application.

Unless otherwise defined, all technical and scientific terms used herein have the same meanings as commonly understood by a person skilled in the art to which the present application belongs. The terms used in the specification are merely intended to describe objectives of specific embodiments, but are not intended to limit the present application. The terms "include", "have", and any variant thereof in the specification, claims, and brief description of the drawings of the present application are intended to cover a non-exclusive inclusion.

In the description of the embodiments of the present application, the technical terms "first", "second", and the like are only used to distinguish different objects, and should not be understood as indicating or implying relative importance or implying the quantity, a specific order, or a primary and secondary relationship of indicated technical features. In the description of the embodiments of the present application, "a plurality of" means two or more, unless otherwise expressly and specifically defined.

"Embodiment" mentioned herein means that particular features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment. A person skilled in the art explicitly and implicitly understands that the embodiments described herein may be combined with other embodiments.

In the description of the embodiments of the present application, the term "and/or" describes only an association relationship for describing associated objects and represents that three relationships may be present. For example, A and/or B may represent presence of three cases: A exists alone, A and B exist at the same time, and B exists alone. In addition, the character "/" in this specification usually indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, orientations or positional relationships indicated by technical terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial", "circumferential", or the like are based on orientations or positional relationships shown in the drawings, are only for the convenience of describing the embodiments of the present application and simplifying the description, do not indicate or imply that a device or an element referred to must have a specific orientation and be constructed and operated in a specific orientation, and therefore cannot be understood as limitations to the embodiments of the present application.

In the description of the embodiments of the present application, unless otherwise explicitly specified or defined, the technical terms such as "mount", "connect", "join", and "fix" should be understood in a broad sense. For example, the connection may be a fixed connection, a detachable connection, or an integral connection; the connection may be a mechanical connection, or an electrical connection; or the connection may be a direct connection, an indirect connection through an intermediate, or internal communication between two elements or an interaction relationship between two elements. For a person of ordinary skill in the art, the specific meanings of the above terms in the embodiments of the present application may be interpreted according to specific situations.

At present, from the perspective of market development, application of power batteries becomes increasingly extensive. The power batteries are not only used in energy storage power systems such as water power stations, thermal power stations, wind power stations, and solar power stations, but also widely used in electric transportations such as electric bicycles, electric motorcycles, and electric vehicles, as well as in military equipment, aerospace, and other fields. With continuously increasing application of the power batteries, market demand for the power batteries is also constantly expanding.

A plurality of batteries are arranged in a power battery. Each battery includes a box and a plurality of cells arranged in the box. The box has functions of accommodating the cells and protecting the cells. Most batteries are installed under bottom plates of electric vehicles. A bottom surface of a battery has a large area and is not protected by a structure of a vehicle. Consequently, during traveling of an electric vehicle, a part that is most prone to damage due to scraping and collision is a bottom of a battery. A bottom-scraping operation condition means that a bottom of a cell is scraped in a horizontal direction. Such scraping causes destructive damage to the cell, which may cause fire and explosion, seriously endangering life and property. An explosion-proof valve is arranged on each cell. The explosion-proof valve is configured to open and release gas or heat when a large amount of gas or heat is generated from thermal runaway of the cell, to reduce a probability of explosion or fire. It is found through research that a speed of discharging a gas flow from the explosion-proof valve is related to use safety of the battery.

The battery disclosed in the embodiments of the present application may be used in electrical devices that use the battery as a power source or in various energy storage systems that use the battery as an energy storage element. The electrical device may be, but is not limited to, a mobile phone, a tablet computer, a notebook computer, an electric toy, an electric tool, an electric bicycle, an electric vehicle, a ship, a spacecraft, or the like. The electric toy may include a fixed or mobile electric toy, such as a game console, an electric vehicle toy, an electric ship toy, and an electric airplane toy, and the spacecraft may include an airplane, a rocket, a space shuttle, a spaceship, and the like.

For ease of description, the following embodiments are described by using a vehicle 1000 according to an embodiment of the present application as an example.

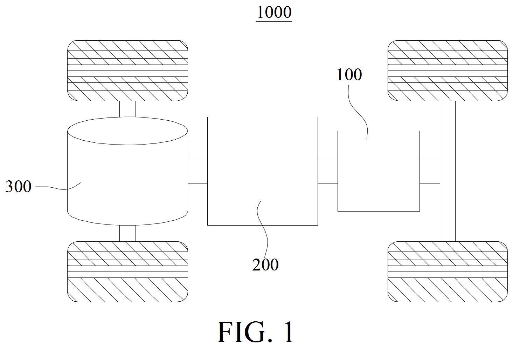

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid electric vehicle, a range-extended electric vehicle, or the like. A battery 1000 is arranged inside the vehicle 1000. The battery 1000 may be arranged at the bottom, head, or tail of the vehicle 1000. The battery 1000 may be configured to supply power to the vehicle 1000. For example, the battery 1000 may be used as an operating power supply for the vehicle 1000. The vehicle 1000 may further include a controller 200 and a motor 300. The controller 200 is configured to control the battery 1000 to supply power to the motor 300, for example, to meet working power requirements during starting, navigation, and traveling of the vehicle 1000.

In some embodiments of the present application, the battery 1000 not only can serve as an operating power supply of the vehicle 1000, but also can serve as a driving power supply of the vehicle 1000, in place of or partially in place of fuel or natural gas, to provide driving power for the vehicle 1000.

Referring to FIG. 1, according to some embodiments of the present application, the present application provides a battery 100, including a cell 4, a box 1, and a guard 2. The cell 4 has an explosion-proof valve 42. The cell 4 is accommodated in the box 1. The box 1 has a box wall. The explosion-proof valve 42 faces the box wall. The guard 2 is located between the cell 4 and the box wall and is configured to cover the cell 4. A vent hole 21 is provided at a position on the guard 2 corresponding to the explosion-proof valve 42. The vent hole 21 runs through the guard 2. The guard 2 is located between the cell 4 and a ground when the battery 100 is installed in the vehicle 1000.

The box 1 is configured to accommodate the cell 4, and the box 1 has functions of accommodating the cell 4 and protecting the cell 4. An explosion-proof valve 42 is arranged on the cell 4. The explosion-proof valve 42 located at a position in the middle between two electrode terminals 41 of the cell 4. The explosion-proof valve 42 is configured to open and release gas or heat when a large amount of gas or heat is generated from thermal runaway of the cell 4, to reduce a probability of explosion or fire. The guard 2 extends in a horizontal direction, and the guard 2 is located between the cell 4 and the box wall of the box 1. An upper end of the guard 2 is connected to the cell 4 and covers the cell 4. A lower end of the guard 2 is connected to the box wall. The guard 2 is arranged, to fix the cell 4, and separate a bottom of the cell 4 from the box wall, thereby reducing movement of the cell 4 relative to the box wall in a horizontal direction. The vent hole 21 is provided on the guard 2. The vent hole 21 runs through the guard 2 in a vertical direction, and the vent hole 21 corresponds to a position of the explosion-proof valve 42 in the cell 4. The vent hole 21 is provided on the guard 2, so that gas in the explosion-proof valve 42 can be quickly discharged, thereby reducing a risk of thermal runaway.

The guard 2 is arranged between the cell 4 and the box wall, and the guard 2 fixes the cell 4, thereby reducing movement of a bottom of the cell 4 relative to the box wall, reducing a probability of scraping of the bottom of the cell 4, improving safety and reliability of the battery 100, and improving self-protection performance of the battery 100. In addition, the vent hole 21 is provided at the position on the guard 2 corresponding to the explosion-proof valve 42 of the cell 4, to quickly discharge gas from the explosion-proof valve 42, reducing a risk of thermal runaway.

Referring to FIG. 1 and FIG. 4 to FIG. 7, in some embodiments, a vent groove 22 in communication with the vent hole 21 is formed on a side of the guard 2 facing away from the cell 4. The vent groove 22 extends in a first direction and runs through the guard 2.

The first direction is a length direction of the guard 2. The vent groove 22 is formed on the guard 2. The vent groove 22 extends in the length direction of the guard 2. The vent groove 22 is located on a side of the guard 2 facing away from the cell 4. That is, the vent groove 22 is located on a lower side of the guard 2. In addition, the vent groove 22 is in communication with the vent hole 21. The vent groove 22 runs through the guard 2.

After the gas in the explosion-proof valve 42 enters the vent hole 21, since the vent hole 21 is in communication with the vent groove 22, the gas in the vent hole 21 enters the vent groove 22. Since the vent groove 22 runs through the guard 2, the gas in the vent groove 22 enters the box 1. Through arrangement of the vent groove 22, an internal discharging capability of the battery 100 is improved, discharging efficiency is improved, and the risk of thermal runaway is further reduced. In addition, the vent groove 22 is located on a lower side of the guard 2, and a position of the vent groove 22 corresponds to a direction in which the gas is jetted, so that the gas can quickly enter the vent groove 22, thereby further improving the discharging efficiency.

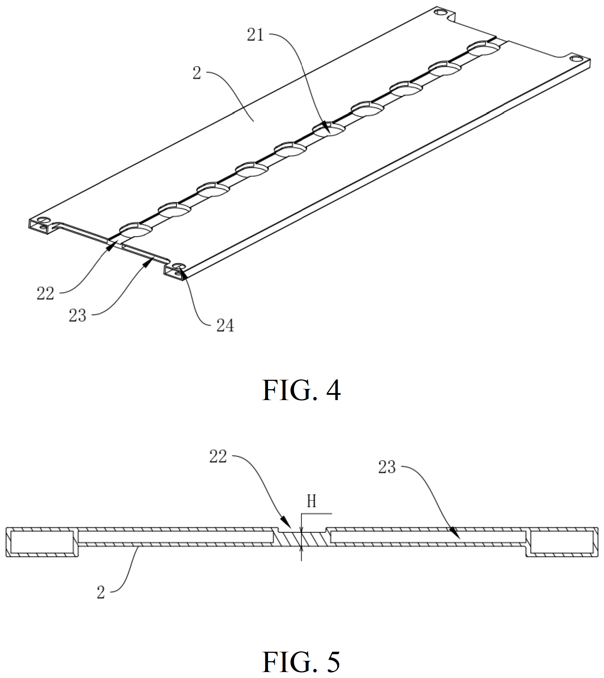

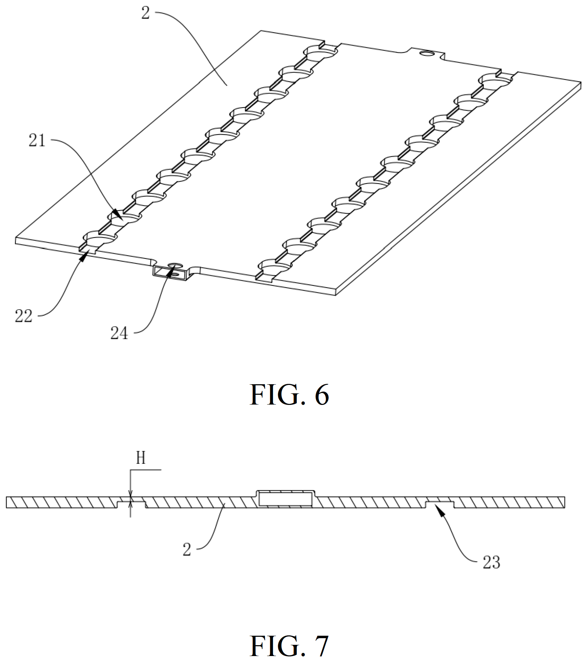

Referring to FIG. 5 and FIG. 7, in some embodiments, a height of the guard 2 is greater than 0.1 mm and less than 50 mm in an axial direction of the vent hole 21.

At a position of the vent hole 21, in the axial direction of the vent hole 21, the height of the guard 2 is H. The height of the guard 2 is greater than 0.1 mm and less than 50 mm, that is, 0.1 mm < H < 50 mm. The height of the guard 2 is greater than 0.1 mm. If the height of the guard 2 is less than 0.1 mm, the height of the guard 2 is excessively small, which may cause weak structural strength at a position of a part of the guard 2, and consequently, the guard 2 has been damaged. In addition, the height of the guard 2 is less than 50 mm. If the height of the guard 2 is greater than 50 mm, a thickness of the guard 2 is excessively large, which may cause the guard 2 to occupy excessively large space in the box 1.

The height of the guard 2 in the axial direction of the vent hole 21 is limited to 0.1 mm to 50 mm, so that the guard 2 has proper structural strength, can support the cell 4, reduce scraping of the bottom of the cell 4, and effectively protect the cell 4 in a bottom-scraping operation condition. In addition, space occupied by the guard 2 in the box 1 and the weight of the guard 2 are properly limited, so that the battery 100 can be more lightweight.

Referring to FIG. 5 and FIG. 7, in some embodiments, the height of the guard 2 is greater than or equal to 0.5 mm and less than or equal to 10 mm in the axial direction of the vent hole 21.

The height of the guard 2 is greater than or equal to 0.5 mm and the height of the guard 2 is less than or equal to 10 mm, that is, 0.5 mm ≤ H ≤ 10 mm, in the axial direction of the vent hole 21.

The height of the guard 2 is further limited, so that the guard 2 has proper structural strength, and can effectively protect the bottom of the cell 4 in a bottom-scraping operation condition, to protect the cell 4. In addition, the space occupied by the guard 2 in the box 1 is limited, and the weight of the guard 2 can also be limited.

Certainly, the material of the guard 2 also affects the structural strength of the guard 2. The material of the guard 2 in this embodiment is a composite material, thereby improving the structural strength of the guard 2.

Referring to FIG. 4 and FIG. 5, in some embodiments, the guard 2 has a hollow cavity 23. The hollow cavity 23 runs through the guard 2 in the first direction. The vent hole 21 is in communication with the hollow cavity 23.

The first direction is the length direction of the guard 2. The guard 2 has the hollow cavity 23. The hollow cavity 23 extends in the horizontal direction. The hollow cavity 23 runs through the guard 2 in the first direction. The vent hole 21 is in communication with the hollow cavity 23. Communication ports are provided on hole walls on two sides of the vent hole 21. The vent hole 21 is in communication with the hollow cavity 23 through the communication ports. A size of the communication ports can be flexibly adjusted according to an actual requirement. After the gas in the explosion-proof valve 42 enters the vent hole 21, since the vent hole 21 is in communication with the hollow cavity 23, the gas in the vent hole 21 enters the hollow cavity 23, and the gas in the hollow cavity 23 enters the box 1.

Through arrangement of the hollow cavity 23, the gas in the vent hole 21 can enter the hollow cavity 23. The hollow cavity 23 provides larger gas venting space for the explosion-proof valve 42, thereby improving the discharging efficiency of the battery 100. In addition, the arrangement of the hollow cavity 23 makes the guard 2 more lightweight, which can reduce mass of the battery 100, and facilitate installation and removal of the battery 100.

In other embodiments, referring to FIG. 6 and FIG. 7, the guard 2 may be a solid structure, and the hollow cavity 23 is not provided. By providing the vent groove 22, an internal discharging capability of the battery 100 is improved, the discharging efficiency is improved, and the risk of thermal runaway is further reduced.

Referring to FIG. 1, in some embodiments, the box 1 includes an upper shell 11 and a bottom guard 12. The upper shell 11 and the bottom guard 12 cooperate to form an accommodating cavity 13. The cell 4 is accommodated in the accommodating cavity 13. A side wall of the bottom guard 12 facing the upper shell 11 is the box wall. The guard 2 is arranged on the bottom guard 12. The cell 4 is arranged between the guard 2 and the upper shell 11.

The upper shell 11 and the bottom guard 12 cover each other, and the upper shell 11 and the bottom guard 12 jointly define the accommodating cavity 13 configured to receive the cell 4. The upper shell 11 is a hollow structure with an opening at one end. The bottom guard 12 is a plate-shaped structure. A side wall of the bottom guard 12 facing the upper shell 11 is the box wall. The bottom guard 12 covers an open side of the upper shell 11, so that the bottom guard 12 and the upper shell 11 jointly define the accommodating cavity 13. An outer edge of the bottom guard 12 is connected to the upper shell 11, so that the bottom guard 12 is connected to the upper shell 11 stably and reliably. The guard 2 is arranged on the bottom guard 12, and a lower end of the guard 2 is connected to the bottom guard 12. The cell 4 is arranged between the guard 2 and the upper shell 11, a lower end of the cell 4 is connected to the guard 2, and an upper end of the cell 4 abuts against the upper shell 11, so that the cell 4 is installed and fixed.

The upper shell 11 and the bottom guard 12 are arranged to cooperate, so that the upper shell 11 and the bottom guard 12 jointly define the accommodating cavity 13, which helps accommodate the cell 4 and the guard 2 into the accommodating cavity 13, thereby protecting and accommodating the cell 4. The cell 4 is arranged between the guard 2 and the upper shell 11, to limit the cell 4 in a vertical direction, reduce movement of the cell 4 relative to the bottom guard 12 in a horizontal direction, and reduce the probability of scraping of the bottom of the cell 4.

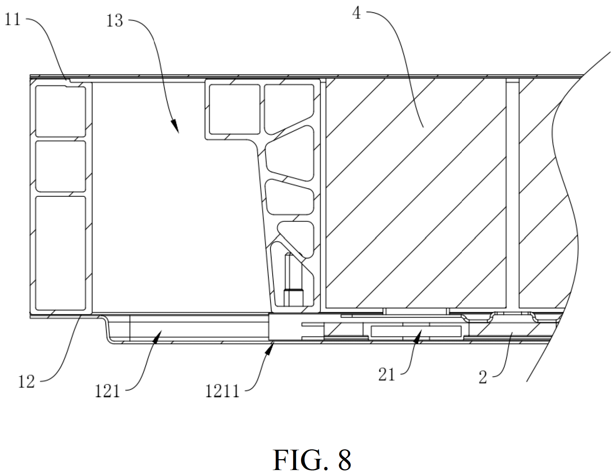

Referring to FIG. 8, in some embodiments, an installation groove 121 is formed on the bottom guard 12. The guard 2 is arranged in the installation groove 121. A groove bottom wall of the installation groove 121 is the box wall.

The installation groove 121 is formed in the middle of the bottom guard 12. The installation groove 121 extends in the vertical direction and is recessed downward. The guard 2 is arranged in the installation groove 121. The installation groove 121 is configured to accommodate the guard 2. A depth of the installation groove 121 is adapted to the thickness of the guard 2.

Arrangement of the installation groove 121 limits the guard 2. The guard 2 may be connected to a groove wall of the installation groove 121 by bonding, so that the guard 2 can be stably and reliably installed in the installation groove 121. In addition, arrangement of the installation groove 121 also helps the installation of the guard 2, so that the installation of the guard 2 is quicker, and installation efficiency of the guard 2 is improved.

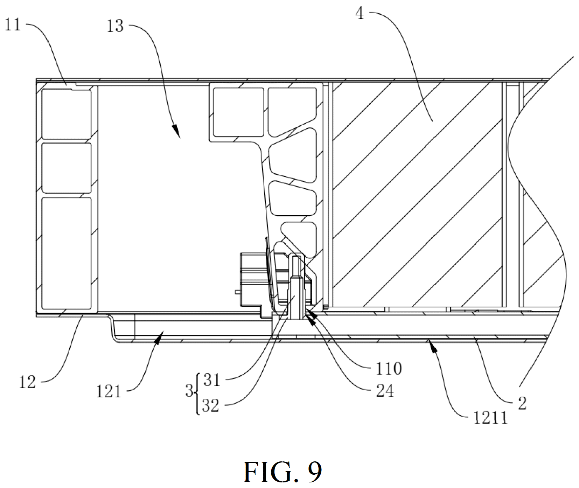

Referring to FIG. 1 and FIG. 9, in some embodiments, the guard 2 is detachably connected to the upper shell 11.

The guard 2 is detachably connected to the upper shell 11, so that the guard 2 can be removed from the upper shell 11, which helps replace the guard 2 when the guard 2 is worn and also helps replace the guard 2 with a different guard 2 based on a quantity and arrangement of batteries 1000. Therefore, use of the guard 2 is more convenient, and use flexibility of the guard 2 is improved.

Referring to FIG. 9, in some embodiments, the guard 2 is threadedly connected to the upper shell 11.

The guard 2 may be threadedly connected to the upper shell 11 by a bolt 3. At least one bolt 3 is provided. Specifically, a first connection hole 24 is formed on the guard 2, and a second connection hole 110 is formed on the upper shell 11 at a position corresponding to the first connection hole 24. The second connection hole 110 is a threaded hole. The bolt 3 includes a screw rod 31 and an end cap 32 that are connected to each other. The screw rod 31 of the bolt 3 passes through the first connection hole 24 from a side of the guard 2 facing away from the cell 4, extends into the second connection hole 110, and is threadedly connected to the second connection hole 110. In addition, the end cap 32 of the bolt 3 abuts against the guard 2, so that the guard 2 is connected to the upper shell 11 stably and reliably.

The threaded connection can achieve self-clinching, so that the guard 2 is connected to the upper shell 11 tightly and reliably, thereby enhancing connection strength between the guard 2 and the upper shell 11, improving connection reliability between the guard 2 and the upper shell 11, and improving structural stability of the battery 100.

In addition, when a plurality of bolts 3 are provided, the plurality of bolts 3 are arranged at intervals and are all configured to connect the guard 2 to the upper shell 11, which not only increases the connection strength, and but also improves the structural stability of the battery 100. Specifically, referring to FIG. 1 and FIG. 4, two bolts 3 may be provided. The two bolts 3 are arranged at an interval in the length direction of the guard 2, and the two bolts 3 are respectively located on two sides of the guard 2, so that the guard 2 can be stably connected to the upper shell 11.

Referring to FIG. 1 and FIG. 6, four bolts 3 may alternatively be provided. The four bolts 3 are respectively located at four corners of the guard 2, so that the four corners of the guard 2 all can be connected to the upper shell 11, and are stressed evenly, thereby increasing the connection strength between the guard 2 and the upper shell 11.

When a large quantity of cells 4 are provided, a plurality of guards 2 may be arranged to support the cells 4, and each guard 2 is detachably connected to the upper shell 11. A quantity and types of the guards 2 are flexibly adjusted according to the quantity of the cells 4, so that the use of the guard 2 is more flexible and convenient.

Referring to FIG. 9, in some embodiments, the guard 2 is riveted to the upper shell 11.

The guard 2 is riveted to the upper shell 11 by a rivet. The riveting may be implemented by using a rivet in any manner of blind riveting, press riveting, or expansion riveting. Riveting has advantages such as high connection strength, good tightness, resistance to loosening, reliable resistance to impact loads, high efficiency, low noise, and simple operation.

Referring to FIG. 8, in some embodiments, the guard 2 is bonded to the cell 4.

A top of the guard 2 is bonded to the cell 4, so that the cell 4 is fixed on the guard 2. Specifically, a top of the guard 2 may be bonded and fixed to the cell 4 by an adhesive such as a structural adhesive or a double-sided adhesive.

The cell 4 can be stably and reliably fixed to the guard 2 by bonding, thereby improving connection stability between the cell 4 and the guard 2, reducing a probability that the cell 4 moves in the horizontal direction, reducing the scraping of the bottom of the cell 4, improving the safety and the reliability of the battery 100, and prolonging a service life of the battery 100.

Referring to FIG. 1, in some embodiments, the first direction is the length direction of the guard 2.

A plurality of cells 4 are provided. The plurality of cells 4 are stacked in the first direction. A quantity of the vent holes 21 is the same as a quantity of the cells 4, and the vent holes 21 and the cells 4 are arranged in a one-to-one correspondence. The plurality of vent holes 21 are arranged in an array in the first direction to form a vent hole group.

A plurality of cells 4 are provided. The plurality of cells 4 are stacked in the first direction. Through arrangement of the plurality of cells 4, the quantity of cells 4 may be adjusted according to an actual situation, to adapt to different application scenarios. The quantity of the vent holes 21 is the same as the quantity of the cells 4, and the vent holes 21 and the cells 4 are arranged in a one-to-one correspondence. A vent hole 21 is correspondingly arranged at a position of an explosion-proof valve 42 of each cell 4, so that the explosion-proof valve 42 of each cell 4 can quickly discharge gas.

The plurality of cells 4 may be connected in series, parallel, or series-parallel. The series-parallel connection means that both series connection and parallel connection exist among the plurality of cells 4. The plurality of cells 4 may be directly connected in series, or in parallel, or in series-parallel, and then a whole formed by the plurality of cells 4 may be accommodated in the battery 100. Certainly, the battery 1000 may alternatively be in a form that a plurality of cells 4 are first connected in series, or in parallel, or in series-parallel to form a battery module, a plurality of battery modules are then connected in series, or in parallel, or in series-parallel to form a whole, and the whole is accommodated in the battery 100. The battery 1000 may further include other structures, for example, the battery 1000 may further include a busbar component for achieving electrical connection among the plurality of cells 4.

Each cell 4 may be a secondary battery or a primary battery; or may be a lithium-sulfur battery, a sodium-ion battery, or a magnesium-ion battery, but is not limited thereto. The cell 4 may be cylindrical, flat, cuboid, or in other shapes. It needs to be stated that an outline of the cell 4 in FIG. 1 is square. However, actually, the cell 4 may be a cylindrical cell 4, or may be a square cell 4.

Referring to FIG. 1, in some embodiments, the first direction is the length direction of the guard 2, and the second direction is a width direction of the guard 2.

The guard 2 includes a plurality of vent hole groups, the plurality of vent hole groups are arranged at intervals in the second direction, and the second direction is perpendicular to the first direction.

The plurality of vent hole groups are arranged at intervals in a front-back direction. Each vent hole group includes a plurality of vent holes 21 arranged at intervals in a left-right direction, that is, a plurality of vent holes 21 are arranged in an array. The vent holes 21 and the cells 4 are arranged in a one-to-one correspondence, so that the plurality of cells 4 can be evenly distributed, and a specific distance is maintained between two adjacent cells 4, so that the box 1 can be stressed more evenly.

Referring to FIG. 1, in some embodiments, an upper shell 11 and the bottom guard 12 cooperate to form the accommodating cavity 13. The bottom of the cell 4 is bonded to the guard 2, thereby fixing the cell 4. The guard 2 is detachably connected to the upper shell 11, thereby fixing the guard 2 on the upper shell 11. The guard 2 is located between the cell 4 and the bottom guard 12. Through the guard 2, the cell 4 is separated from the bottom guard 12 and is fixed, thereby reducing movement of the cell 4 in the horizontal direction, reducing a probability of scraping of the bottom of the cell 4, and effectively protecting the cell 4. The vent hole 21 is provided at a position on the guard 2 corresponding to the explosion-proof valve 42 of the cell 4, and the vent groove 22 is provided on the guard 2. The vent groove 22 is in communication with the vent hole 21 and the accommodating cavity 13. After the gas in the explosion-proof valve 42 enters a corresponding vent hole 21, since the vent hole 21 is in communication with the vent groove 22, the gas in the vent hole 21 enters the vent groove 22. Since the vent groove 22 is in communication with the accommodating cavity 13, the gas in the vent groove 22 enters the accommodating cavity 13. Through the arrangement of the vent hole 21 and the vent groove 22, the internal discharging capability of the battery 100 is improved, the discharging efficiency is improved, and the risk of thermal runaway is further reduced.

According to some embodiments of the present application, the present application provides a battery 1000. The battery 1000 includes the foregoing battery. The vehicle includes all embodiments of all technical solutions of the foregoing battery 1000. Therefore, the vehicle has at least all beneficial effects brought by all the foregoing embodiments, and details are not described herein.

According to some embodiments of the present application, the present application provides a vehicle. The vehicle includes a housing. An installation position is arranged inside the housing, and the installation position is used for installing the foregoing battery 1000. The vehicle includes all embodiments of all technical solutions of the foregoing battery 1000. Therefore, the vehicle has at least all beneficial effects brought by all the foregoing embodiments, and details are not described herein.

Finally, it should be noted that, the foregoing embodiments are merely used for describing the technical solutions of the present application, but are not intended to limit the present application. Although the present application has been described in detail with reference to the foregoing embodiments, a person of ordinary skill in the art should understand that modifications may still be made to the technical solutions recorded in the embodiments or equivalent replacements may be made to some or all technical features of the present application. These modifications or replacements do not cause the essence of corresponding technical solutions to depart from the scope of the technical solutions of the embodiments of the present application, and should be covered by the scopes of the claims and the specification of the present application. In particular, the various technical features mentioned in the various embodiments can be combined in any manner provided that there is no structural conflict. The present application is not limited to the specific embodiments disclosed herein, but includes all technical solutions that fall within the scope of the claims.

## Claims

1. A battery, comprising:
a cell, wherein the cell has an explosion-proof valve;
a box, wherein the cell is accommodated in the box, the box has a box wall, and the explosion-proof valve faces the box wall; and
a guard, wherein the guard is located between the cell and the box wall and is arranged to cover the cell, a vent hole is provided at a position on the guard corresponding to the explosion-proof valve, and the vent hole runs through the guard; and the guard is located between the cell and a ground when the battery is installed in a vehicle.

2. The battery according to claim 1, wherein a vent groove in communication with the vent hole is formed on a side of the guard facing away from the cell, and the vent groove extends in a first direction and runs through the guard.

3. The battery according to claim 1, wherein a height of the guard is greater than 0.1 mm and less than 50 mm in an axial direction of the vent hole.

4. The battery according to claim 3, wherein the height of the guard is greater than or equal to 0.5 mm and less than or equal to 10 mm in the axial direction of the vent hole.

5. The battery according to any one of claims 1 to 4, wherein the guard has a hollow cavity, the hollow cavity runs through the guard in the first direction, and the vent hole is in communication with the hollow cavity.

6. The battery according to any one of claims 1 to 4, wherein the box comprises an upper shell and a bottom guard, the upper shell and the bottom guard cooperate to form an accommodating cavity, the cell is accommodated in the accommodating cavity, a side wall of the bottom guard facing the upper shell is the box wall, the guard is arranged on the bottom guard, and the cell is arranged between the guard and the upper shell.

7. The battery according to claim 6, wherein an installation groove is formed on the bottom guard, the guard is arranged in the installation groove, and a groove bottom wall of the installation groove is the box wall.

8. The battery according to claim 6, wherein the guard is detachably connected to the upper shell.

9. The battery according to claim 8, wherein the guard is threadedly connected to the upper shell.

10. The battery according to claim 8, wherein the guard is riveted to the upper shell.

11. The battery according to any one of claims 1 to 4, wherein the guard is bonded to the cell.

12. The battery according to any one of claims 1 to 4, wherein a plurality of cells are provided, the plurality of cells are stacked in the first direction, a quantity of the vent holes is the same as a quantity of the cells, the vent holes and the cells are arranged in a one-to-one correspondence, and the plurality of vent holes are arranged in an array in the first direction to form a vent hole group.

13. The battery according to claim 12, wherein the guard comprises a plurality of vent hole groups, the plurality of vent hole groups are arranged at intervals in a second direction, and the second direction is perpendicular to the first direction.

14. A vehicle, comprising the battery according to claims 1 to 13, wherein the guard is located between the cell and the ground.
